# EUROPEAN PATENT APPLICATION

(11) **EP 2 322 415 A1**
(43) Date of publication of application: **18.05.2011**
(21) Application number: 10014228.0
(22) Date of filing: 03.11.2010
(51) Int. Cl.: B62J 31/00, F16H 57/05

(54) **Bicycle chain cleaning apparatus**

(30) Priority: 05.11.2009 IT MI20091942
(71) Applicant: SILVA S.r.l., 20098 San Giuliano Milanese (MI) (IT)
(72) Inventor: D'Andrea, Silvano, San Giuliano Milanese (MI) (IT)
(74) Representative: Ferraiolo, Rossana

(57) **Abstract**

The device (1) for cleaning a transmission chain of a bicycle comprises a pinion (2) provided with a gear (3) and an axial portion with a smooth surface (2a) thereon, a brush-holder body (4) assembled with said pinion (2) in a rotating manner which allows the brush-holder body (4) itself to rotate in its vertical plane to align the brush-holder body (4) itself to the transmission chain and to adjust it to the movement of the chain, upper and lower rests (5,6) for brushes (5a,6a) provided with bristles facing each other, said pinion (2) being provided with a pivot (8) for mounting the device itself on a rear fork of the bicycle after having removed the rear wheel, said device (1) being driven by operating on the gear levers of the bicycle.

## Description

### Basis of the invention

The present invention refers to a device for cleaning the chain of a bicycle and in particular a device for cleaning the transmission chain of a bicycle which uses the gear levers of the bicycle to actuate the device itself.

### State of the Art

There are known in the state of the art devices for cleaning the chain of a bicycle from extraneous residuals such as soil, sand, powder and other abrasive contaminant to maintain the good performances of the transmission chain.

The known devices apply directly to the transmission chain to be cleaned and make use of suitable detergents and de-greasing products for cleaning the chain.

Substantially, the known devices are characterized by rotating brushes, usually in number of two or three, which are put in rotation by the movement of the chain so that the brushes act on different sections of the chain while the chain is moved forward.

Basically, the known devices consist of an holder into which are assembled the rotating brushes, said holder being provided with lateral openings to introduce the cleaning solutions or de-greasing solvents. Other known devices are provided with nozzles, such as spray nozzles, mounted on the device itself to dispense the needed detergents or possible lubricants.

### Disadvantages of the State of the Art

The above mentioned devices show the following disadvantages and drawbacks.

The cleaning action applies essentially on the upper and lower parts of the chain, leaving contaminants not removed on the lateral sides of the chain.

The known devices are provided with fixing means and pivotal means which make the mounting of the device to the bicycle time-consuming, beside the fact that said devices are susceptible of breakings, such as the breaking of the rotating elements on which are mounted the rotating brushes or the breaking of the fixing or pivotal elements above mentioned.

Furthermore, the devices provided with nozzles, such as spray nozzle containing detergent solutions or lubricants, are quite cumbersome and inconvenient in the use.

### Exposition of the invention

A main scope of the present invention is to obviate to the above disadvantages and drawbacks and to provide a device for cleaning the chain of a bicycle which uses the gear levers of the bicycle to actuate the device itself, and to provide a device adapted to clean the chain along its lateral sides, besides its upper and lower surfaces.

A further scope is to provide a device for cleaning the chain of a bicycle adapted to be mounted on the rear fork of the bicycle after having removed the rear wheel.

A further scope again is to provide a device for cleaning the chain of a bicycle which is easy to apply, resistant to the breakings and small-sized.

The above scopes are accomplished providing a device for cleaning the chain of a bicycle characterized in that it comprises:
a pinion provided with a gear and an axial portion with a smooth surface thereon,
a brush-holder body assembled with said pinion in a rotating manner which allows the brush-holder itself to rotate in its vertical plane,
upper and lower rests for brushes which are integral with said brush-holder body and on which are mounted respectively an upper brush and a lower brush facing each other, provided with opposed bristles,
said pinion being provided with a pivot for mounting the device itself on a rear fork of the bicycle after having removed the rear wheel, said pinion being further provided with a blocking knob for tightening the device itself to the rear fork,
said device for cleaning a transmission chain of a bicycle being driven by operating on the gear levers of the bicycle to cause the chain
   - to be moved laterally along said mentioned axial portion with smooth surface of the pinion to shift laterally the chain itself forcing it to pass through the brushes,
   and
   - to engage at full stroke the gear of the pinion so that by operating on the foot pedal of the bicycle the chain itself is moved forward through the brushes, the repetitive actions of lateral shifts through the brushes-and the concomitant forward movement of the chain through the brushes realizing a rubbing action along the lateral sides of the chain, besides its upper and lower surfaces for the entire length of the chain.

The brush-holder body can rotate in its vertical plane to align the brush-holder itself to the transmission chain (12) and to adjust it to the movements of the chain.

The brush-holder body is provided with at least a first pawl adapted to increase the alignment of the chain with the brushes.

Furthermore, the brush-holder body is optionally provided with a shaped portion to allow a corresponding manual grip by a user.

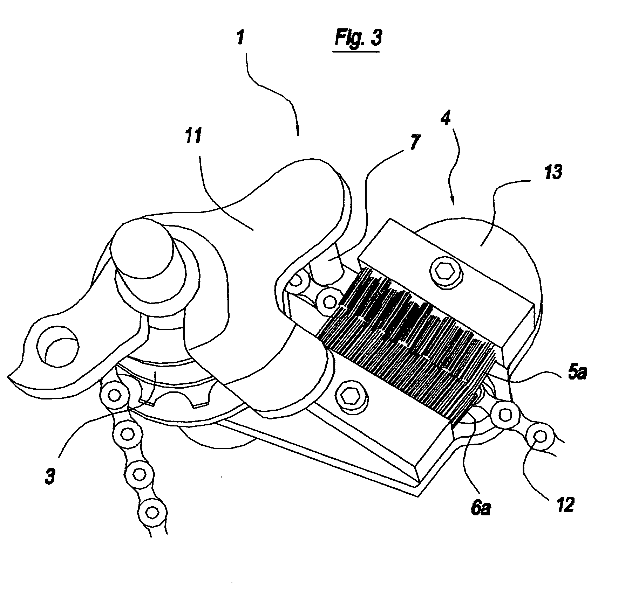

The assembly and operation of the present device will be more evident from the following description and the attached drawings of which Figure 3 shows a preferred embodiment of the invented device in an operative step (such figure will be following described in details).

According to the present invention, the brush-holder is provided with brushes faced each other with a distance between the respective bristles of 0 to 1,0 mm.

The bristles of the brushes are conveniently tilted respect their horizontal and vertical planes, so that the contact on the sides and surfaces of the chain and between the links of the chain is increased.

Preferably, the bristles are arranged both aligned and in a scalar way to optimize said contact.

Optionally, the brush-holder body is provided with a second pawl facing the first pawl to increase the alignment of the chain with the brushes when the chain is moved backwards through the brushes.

The present device can be performed by highly resistant materials such as stainless steel or similar.

### Advantages of the invention

The present device shows the following advantages.

It is mounted directly on the rear fork of the bicycle after having removed the rear wheel and it is driven by operating on the gear levers of the bicycle.

It is adapted to clean the chain along its lateral sides, besides its upper and lower surfaces for the entire length of the chain.

It is easy to apply , resistant to the breakings and small-sized.

Said device can be used every time the bicycle is washed, making use of the same detergent used for cleaning the bicycle, so that the chain and the bicycle are cleaned in a sole operation. The execution of repetitive cycles of cleaning by using the invented device forces the chain to pass repeatedly through the brushes for the desired number of repetitions.

Furthermore, at the end of the washing and drying procedure, the present device can be used for the distribution of a suitable lubricant on the sides and surfaces of the chain or between the links of the chain according to a desired number of repetitions.

### Examples of embodiment

The device for cleaning the transmission chain of a bicycle according to the present invention is now described in detail with reference to a preferred embodiment and the attached figures where:
Figure 1 is a first perspective view;
Figure 2 is a second perspective view;
Figure 3 is a third perspective view;
Figure 4 is a fourth perspective view .

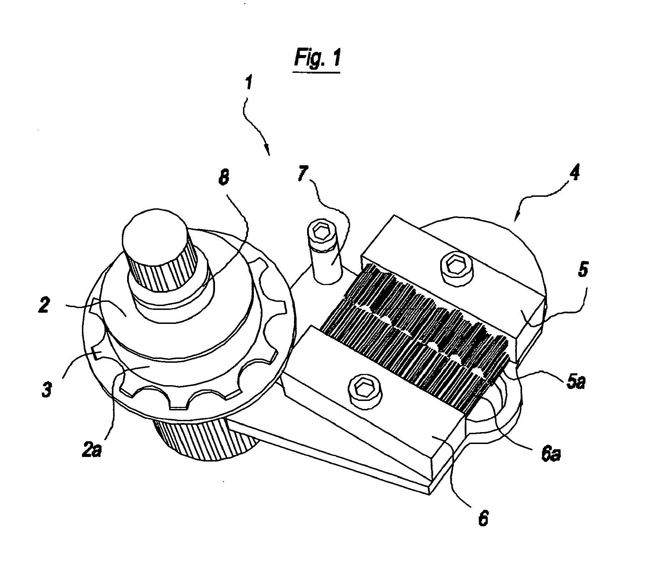

With reference to Figure 1 it is shown a device 1 for cleaning a transmission chain of a bicycle comprising
a pinion 2 provided with a gear 3,
a brush-holder body 4 provided with upper and lower rests 5, 6 for brushes, and corresponding upper and lower brushes 5a, 6a provided with bristles.

The brushes 5a, 6a face each other with a distance between the respective bristles less than 1,0 mm. This allows a vigorous rubbing action of the bristles along the lateral sides of the chain and against the upper and lower surfaces of the chain when the chain is forced to pass through the brushes.

In said figure it is shown the axial portion of the pinion 2 with a smooth surface 2a thereon adapted for receiving the chain (not shown).

The brush-holder body 4 is assembled with said pinion 2 in a rotating manner so that the brush-holder itself can rotate in its vertical plane.

This allows the alignment of the brush-holder to the transmission chain and to adjust the brush-holder body itself to the movements of the chain.

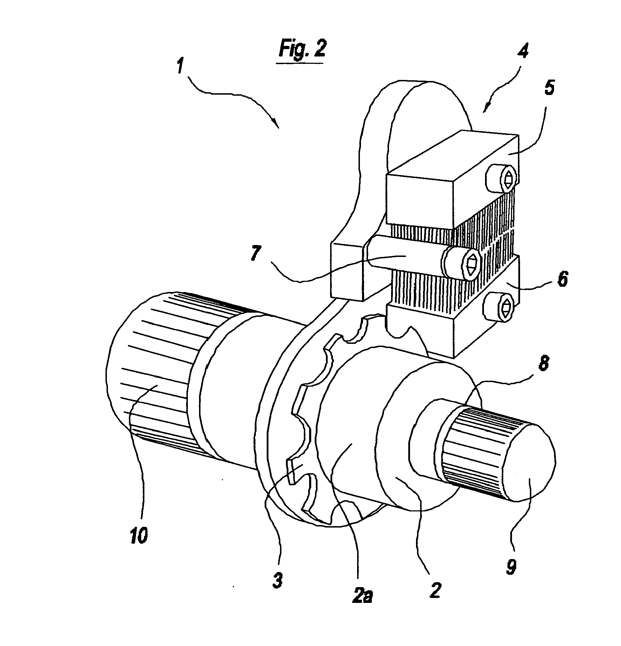

Figure 2 is a second perspective view of the device of Figure 1. In such view it is clearly visible the brush-holder body 4 assembled with the pinion 2. In the figure are also shown a first pawl 7 adapted to increase the alignment of the chain (not shown) with the brushes, a pivot 8 adapted for mounting the pinion 2 to a rear fork 11 of the bicycle and a corresponding fixing mean 9. With reference number 10 it is indicated a blocking knob for tightening the device 1 to the rear fork.

With reference to Figure 3 it is shown a device 1 for cleaning a transmission chain of a bicycle in an operative step. In said figure it is shown a rear fork 11 of a bicycle on which it is mounted the pinion 2 with the gear 3. In the figure it is shown the rear fork 11 and, partially hidden, said pinion 2 with the gear 3. The first pawl 7 abuts the chain 12 which appears to be aligned with the brushes 5a, 6a.

When the device for cleaning the chain is assembled on the rear fork 11 and the chain is positioned on the pinion 2 on the axial portion with a smooth surface thereon 2a, by operating on the gear levers of the bicycle the chain is driven
- to move laterally along said axial portion with smooth surface 2a of the pinion 2 and shifted laterally so that it is forced to pass through the brushes 5a, 6a,
and
- to engage at full stroke the gear 3 so that by operating on the foot pedal of the bicycle the chain itself is moved forward through the brushes.

The repetitive actions of the lateral shifts through the brushes-and the concomitant forward movement of the chain through the brushes realize a rubbing action along the lateral sides of the chain, besides its upper and lower surfaces for the entire length of the chain.

In the figure, with reference number 13 is indicated a shaped portion in the upper portion of the brush-holder body 4 to allow a manual grip of the device by a user. This allows the user to swing up and down the brush-holder body 4 to force the brushes against the chain so that the rubbing action of the bristles on the chain itself can be increased.

The bristles of the brushes are of suitable material, preferably nylon. They are distributed with convenient tilts respect their horizontal and vertical planes and conveniently arranged in a linear or scalar manner. Said arrangement of the bristles shows a higher memory of return to the original shape.

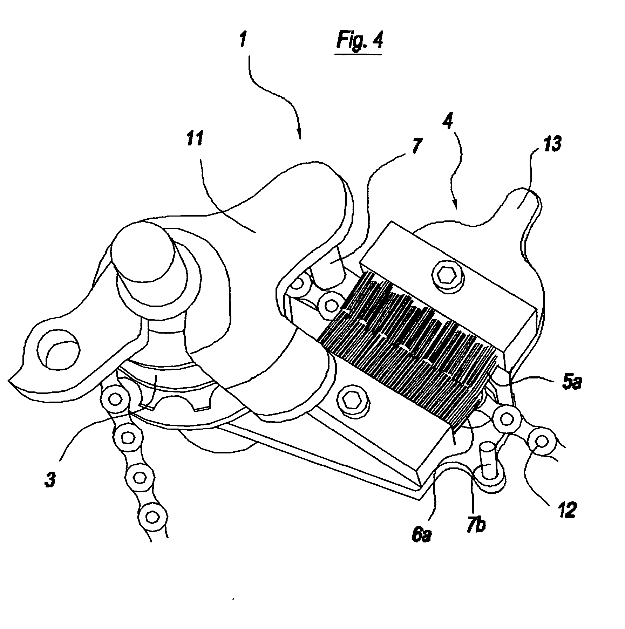

Figure 4 shows an alternative embodiment of the device of Figure 3 in which it is shown a second pawl 7b facing the first pawl 7. The action against the chain of said second pawl 7b increases the alignment of the chain with the brushes 5a, 6a when the chain is moved backwards through the brushes.

In said figure, it is shown the portion 13 conveniently shaped to increase the manual grip of the device by a user.

Although the depicted device for cleaning a transmission chain of a bicycle works fully when applied to a bicycle equipped with gears driven by the gear levers, it can also be applied to a bicycle without gears driven by the gear levers.

In a such application the rubbing action of the chain against the brushes is obtained by operating on the foot pedal of the bicycle to move the chain forward through the brushes for its entire length.

The subject invention has been depicted with reference to preferred embodiments, however alternative embodiments can be considered remaining in the field of the present invention as defined in the attached claims.

## Claims

1. Device (1) for cleaning a transmission chain (12) of a bicycle **characterised in that** it comprises
a pinion (2) provided with a gear (3) and an axial portion with a smooth surface thereon (2a),
a brush-holder body (4) assembled with said pinion (2) in a rotating manner which allows the brush-holder itself to rotate in its vertical plane to align the brush-holder body to the transmission chain (12) and to adjust it to the movements of the chain,
upper and lower rests (5, 6) for brushes which are integral with said brush-holder body (4) and on which are mounted respectively an upper brush (5a) and a lower brush (6a) facing each other, provided with opposed bristles,
said pinion (2) being provided with a pivot (8) for mounting the device itself on a rear fork (11) of the bicycle after having removed the rear wheel, said pinion (2) being further provided with a blocking knob (10) for tightening the device (1) itself to the rear fork (11),
said device for cleaning a transmission chain of a bicycle being driven by operating on the gear levers of the bicycle to cause the chain
- to be moved laterally along said axial portion with smooth surface (2a) of the pinion (2) to shift laterally the chain itself forcing it to pass through said brushes (5a, 6a) and
- to engage at full stroke the gear (3) of the pinion (2) so that by operating on the foot pedal of the bicycle the chain itself is moved forward through said brushes (5a, 6a),
the repetitive actions of lateral shifts through the brushes and the concomitant forward movement of the chain through the brushes realizing a rubbing action along the lateral sides of the chain and the upper and lower surfaces of the chain for its entire length.

2. Device (1) for cleaning a transmission chain (12) of a bicycle as described in claim 1 **characterised in that** brush-holder body (4) is provided with at least a first pawl (7) to keep the chain (12) aligned with the brushes (5a, 6a).

3. Device (1) for cleaning a transmission chain (12) of a bicycle as described in claim 1 **characterised in that** the brushes (5a, 6a) face each other with a distance between the respective bristles of 0 to 1,0 mm.

4. Device (1) for cleaning a transmission chain (12) of a bicycle as described in claim 1 **characterised in that** the bristle of the brushes (5a, 6a) are tilted respect their horizontal and vertical planes.

5. Device (1) for cleaning a transmission chain (12) of a bicycle as described in claim 1 **characterised in that** the brushes (5a, 6a) are aligned in a scalar way.

6. Device (1) for cleaning a transmission chain (12) of a bicycle as described in claim1 and claim 2 **characterised in that** the brush-holder body (4) is provided with a second pawl (7b) facing the first pawl (7) to keep the chain (12) aligned with the brushes (5a, 6a) while the chain is moved backwards through the brushes.

7. Device (1) for cleaning a transmission chain (12) of a bicycle as described in claim 1 **characterised in that** the brush-holder body (4) is provided with a shaped portion (13) to allow a corresponding manual grip by a user.
